# EUROPEAN PATENT APPLICATION

(11) **EP 2 034 419 A1**
(43) Date of publication of application: **11.03.2009**
(21) Application number: 08172875.0
(22) Date of filing: 30.01.2007
(51) Int. Cl.: G06F 17/30

(54) **Method and apparatus for merging data objects**

(30) Priority: 10.02.2006 KR 20060012889
(62) Divisional of application: 07101431.0
(71) Applicant: Samsung Electronics Co., Ltd., Suwon-si, Gyeonggi-do 442-742 (KR)
(72) Inventor: Lee, Jung-bong, Seocho-gu Seoul (KR); Seo, Young-wan, Suwon-si Gyeonggi-do (KR); Lee, Ja-yeon, Dongjak-gu Seoul (KR)
(74) Representative: Bruce, Alexander Richard Henry

(57) **Abstract**

A method of merging data objects, including folders and opened information items, at the same level and an apparatus performing the method are provided. The data object merging method includes receiving a user command to merge two data objects; and merging the contents of the two data objects according to the input user command. According to the method and apparatus, folders can be merged at the same level and image data or text data can be input as individual objects and then, when necessary, the information items can be easily merged such that file management can be performed conveniently.

## Description

The present invention relates to merging of data objects of a computing system, and more particularly, to merging data objects including folders and opened information items at the same level, and an apparatus for performing the method.

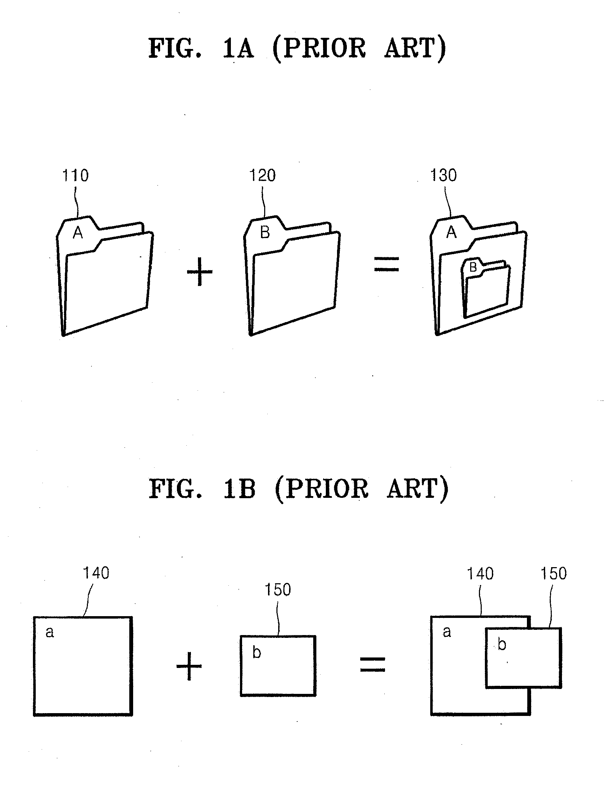

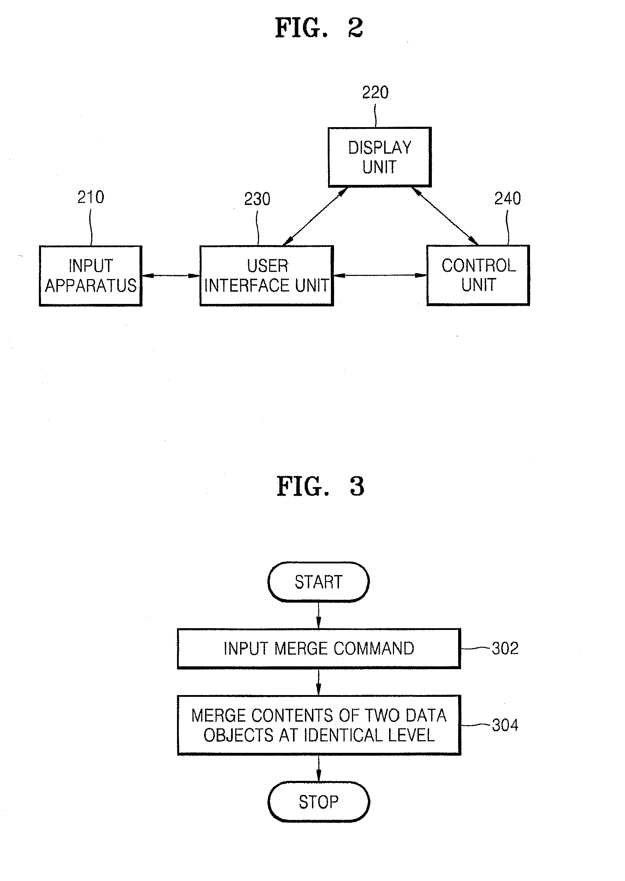

FIGS. 1 and 2 illustrate results of attempting to merge data objects in a conventional digital computing environment such as a web pad or a personal digital assistant (PDA).

FIG. 1A illustrates a result of merging two folders according to a conventional technology. Referring to FIG. 1A, when folder A 110 is added to folder B 120, a resultant folder 130 in which folder B is included as a subfolder of folder A is obtained. In other words, a merged data object becomes a lower level information item of another object. However, a management method by which the merged data object has the same data level as before the merging is needed.

FIG. 1B illustrates that according to the conventional technology it is impossible to merge two data objects including opened information items. An opened information item indicates a file in a state in which stored information such as an image or text is opened, and is a term used in the present invention to distinguish it from a folder. Referring to FIG. 1B, even if data object b 150 including an opened information item is moved close to data object a 140 including an opened information item, the two data objects 140 and 150 cannot be merged. In order to merge two data objects including opened information items, a process of manually merging the objects using a required editor should be performed, which is inconvenient.

The present invention provides a method and apparatus for merging data objects, such as folders, images files and text files, at the same level through a convenient user interface.

According to an aspect of the present invention, there is provided a data object merging method of merging two data objects displayed on a screen, the method including: receiving a user command to merge the two data objects; and merging the contents of the two data objects according to the input user command.

The receiving of the input of the user command may include, if the user drags the first data object, moves the first data object on the second data object, and drops the first data object, recognizing the dropping as a command to merge the first data object to the second data object.

The merging of the contents of the two data objects may include, if the two data objects are folders, moving all data objects included in the folder corresponding to the first data object, to a folder corresponding to the second data object.

The receiving of the input of the user command may include, if the user drags the first data object, moving the first data object close to an edge of the second data object in the direction in which the first data object is desired to be merged into the second data object, and then dropping the first data object, recognizing the dropping as a command to merge the first data object into the edge of the second data object.

The merging of the contents of the two data objects may include, if the two data objects include opened information items, adding the contents of the first data object to the second data object at the edge of the second data object in the direction the first data object is moved.

The receiving of the user command may include: the user dragging the first data object and moving the first data object in the direction that the second data object is positioned; if the first data object is moved to within a predetermined distance from the second data object, expressing marks indicating mergeable regions on the first data object and the second data object; and if the user moves the first data object so that mergeable regions expressed by the marks come into contact with each other, and drops the first data object, recognizing the dropping as a command to merge the two data objects.

The expressing of the marks may include expressing a mark in the form of a guideline on at least part of each edge of the two data objects.

The recognizing of the command to merge the two data objects may further include, when the mergeable regions are in contact with each other, expressing different marks on the mergeable regions in contact, the marks that can distinguish the mergeable regions in contact from other regions of the two data objects.

The receiving of the user command may include: the user dragging the first data object and moving the first data object in the direction that the second data object is positioned; if the first data object is moved into a merging range of the second data object, displaying on a screen that the two data objects can be merged; and while it is displayed on the screen that the two data objects can be merged, if the user drops the first data object, recognizing the dropping as a command to merge the two data objects.

The displaying that the two data objects can be merged may include, if the two data objects include opened information items, expressing a first mark indicating that the second data object can be merged, on an edge of the second data object toward which edge the first data object is moved.

The displaying that the two data objects can be merged may further include expressing a second mark indicating that the first data object can be merged, on an edge of the approaching first data object that faces the second data object. According to another aspect of the present invention, there is provided a data object merging apparatus for merging two data objects displayed on a screen, the apparatus including: a user interface unit receiving a user command to merge the two data objects; and a control unit merging the contents of the two data objects according to the input user command received from the user interface unit and displaying the merging result on the screen.

Embodiments of the invention will now be described by way of example with reference to the attached drawings in which:
FIG. 1A illustrates a result of merging two folders according to a conventional technology;
FIG. 1B illustrates that according to the conventional technology it is impossible to merge two data objects including opened information items;
FIG. 2 illustrates a structure of a data object merging apparatus according to an exemplary embodiment of the present invention;
FIG. 3 is a flowchart of a method of merging data objects according to an exemplary embodiment of the present invention;
FIG. 4A is a flowchart of a method of merging two folders according to an exemplary embodiment of the present invention;
FIG. 4B is a flowchart of a method of merging two data objects including opened information items, according to an exemplary embodiment of the present invention;
FIG. 5A illustrates a result of merging two folders according to an exemplary embodiment of the present invention;
FIGS. 5B through 5D illustrate a process and result of merging two data objects including opened information items, according to an exemplary embodiment of the present invention;
FIG. 6A illustrates an example of a screen in which two data objects including opened information items are moved close to each other, according to an exemplary embodiment of the present invention;
FIG. 6B illustrates an example of a screen in which two data objects including opened information items are moved so that mergeable regions of the two data objects come into contact with each other, according to an exemplary embodiment of the present invention; and
FIG. 6C illustrates an example of a screen in which two data objects including opened information items are moved beyond mergeable regions of the respective data objects, according to an exemplary embodiment of the present invention.

Referring to FIG. 2, the data object merging apparatus according to an exemplary embodiment of the present invention is composed of a user interface unit 230 for receiving a user command input from a user through an input apparatus 210 such as a mouse or a touch screen, and interpreting the command. The data object merging apparatus also includes a control unit 240 that controls the data object merging apparatus according to the user command received from the user interface unit 230 so that the contents of two data objects are merged and the merging result is displayed on a display unit 220. Operations of the user interface unit 230 and the control unit 240 will now be explained in detail.

FIG. 3 is a flowchart of a method of merging data objects according to an exemplary embodiment of the present invention.

Referring to FIG. 3, the user interface unit 230 receives a user command to merge two data objects displayed on a screen in operation 302. In order to input a merge command, a variety of methods can be used in addition to a method of selecting a data object to be merged in a menu.

When inputting a merge command according to an exemplary embodiment of the present invention, if the user drags a first data object, moves the first data object on a second data object that is the object of merging, and then, drops the first object, the user interface unit 230 recognizes these actions as a command to merge the first data object into the second data object.

In another exemplary embodiment, if the user drags the first data object, moves the first data object to an edge of the second data object in the direction in which the first data object is desired to be merged into the second data object, and then, drops the first data object, the user interface unit 230 recognizes these actions as a command to merge the first data object into the edge of the second data object.

A method of using a mark indicating that merging can be performed is used in another exemplary embodiment. If the user drags the first data object, moves the first data object toward the location where the second data object is positioned, and the first data object enters into a merging range of the second data object, the user interface unit 230 displays on the screen that the two data objects can be merged.

While it is displayed on the screen that the two data objects can be merged, if the user drops the first data object, it is recognized as a command to merge the two data objects. In order to indicate that two data objects including opened information items can be merged, a mark indicating that the second data object can be merged may be expressed, indicated or displayed on an edge of the second data object that faces the first data object.

In another exemplary embodiment in which a mark is used, if the user drags the first data object and moves the first data object toward the location where the second data object is positioned and then the first data object is moved to within a predetermined distance from the second data object, marks indicating that the two data objects are in a merging range may be expressed, indicated or displayed. For example, marks can be expressed, indicated or displayed on all edges of the two data objects. If the user further moves the first data object such that mergeable regions on which marks are expressed, indicated or displayed come into contact, and then, the user drops the first data object, it is recognized as a command to merge the two data objects.

In the exemplary embodiments using marks as described above, marks on the first data object that is desired to be merged may be different to marks on the second data object that is the target of the merging, so that the user can easily distinguish one object from the other. Also, a guideline-shaped mark may be expressed, indicated or displayed on parts of edges of the two data objects that face each other. For example, a guideline with a length being one third the length of an edge may be used to express, indicate or display a mergeable region. Meanwhile, when the mergeable regions of the two data objects are in contact with each other, if other marks allowing the user to distinguish the mergeable regions from the remaining regions of the two data objects are expressed, indicated or displayed, the user can input a merge command more conveniently.

Next, the control unit 230 merges the contents of the two data objects at the same level according to the user's command in operation 304. If the two data objects are folders, the contents of the first folder are moved to the target folder. Then, the merged first folder may be deleted. If the two data objects are files including an opened information item, the two data objects are folded or the edges of the two data objects that are close to each other are connected so that the two data objects can be merged. When mergeable regions are expressed, indicated or displayed on the two data objects, the two data objects are merged so that two mergeable regions in contact with each other are connected.

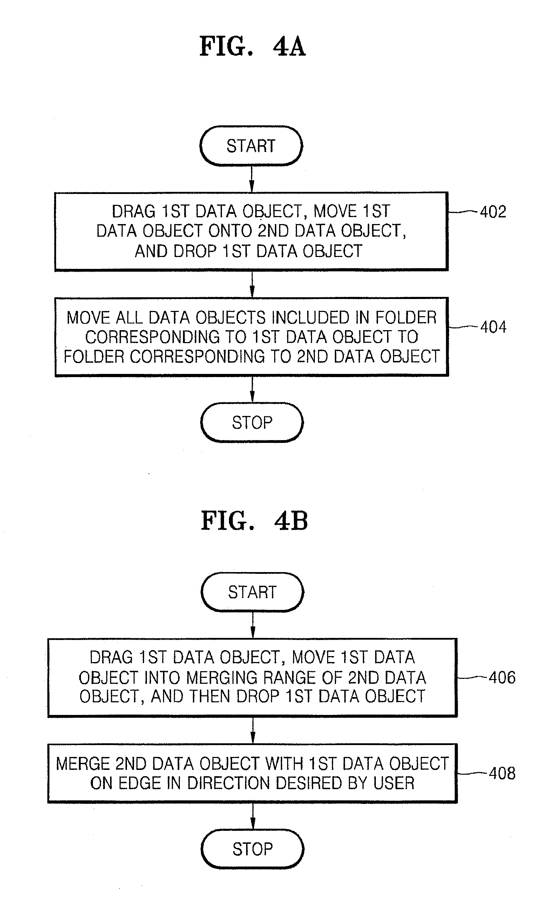

FIG. 4A is a flowchart of a method of merging two folders according to an exemplary embodiment of the present invention.

Referring to FIG. 4A, if by using the input apparatus 210 the user drags a folder corresponding to a first data object, moves the folder on a folder corresponding to a second data object, and then drops the first folder, the user interface unit 230 recognizes this as a command to merge the two data objects in operation 402. As described above, a variety of methods can be used in order to recognize a merge command. The control unit 240 merges the two folders by moving all data objects included in the folder corresponding to the first data object to the folder corresponding to the second data object in operation 404. Also, the control unit 240 controls the data object merging apparatus so that the second folder to which the contents of the first folder are merged is displayed on the display unit 220. FIG. 4B is a flowchart of a method of merging two data objects including opened information items according to an exemplary embodiment of the present invention.

Referring to FIG. 4B, if the user drags a first data object, moves the first data object into a merging range of a second data object, and then drops the first data object, the user interface unit 230 recognizes it as a command to merge the first data object and the second data object in operation 406. As described above, a variety of methods can be used to recognize a merge command. The control unit 240 receives the merge command from the user interface unit 230 and adds the contents of the first data object to the second data object on an edge of the second data object facing a direction desired by the user, so that the two data objects are merged in operation 408. After the merging, the control unit 240 controls the data object merging apparatus so that the second data object with added contents of the first data object can be displayed on the display unit 220.

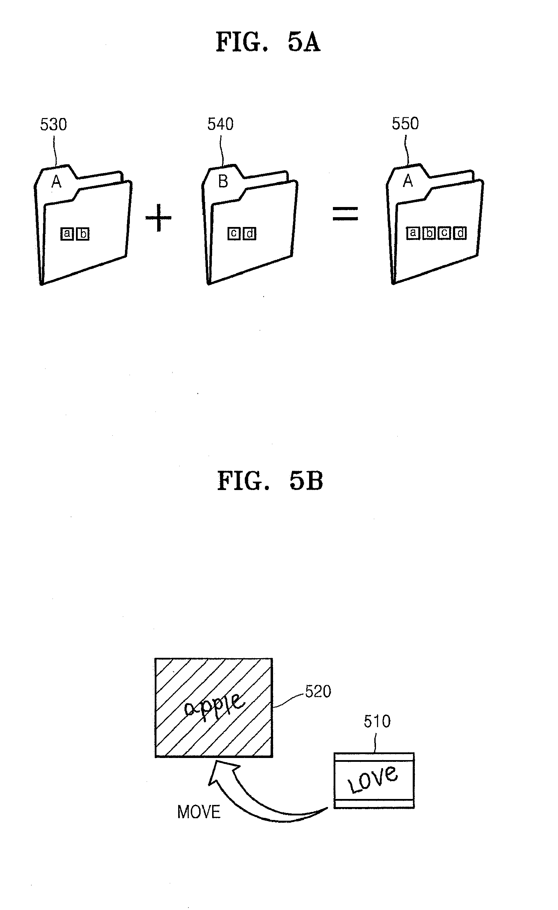

FIG. 5A illustrates a result of merging two folders according to an exemplary embodiment of the present invention.

Referring to FIG. 5A, when folder A 530 having files a and b is merged with folder B 540 having files c and d, folder A 550 after the merging further includes files c and d that had previously belonged to folder B 540. It can be seen that files a through d are included in folder A 550 at the same folder level, unlike in the conventional technology.

FIGS. 5B through 5D illustrate a process and result of merging two data objects including opened information items, according to an exemplary embodiment of the present invention.

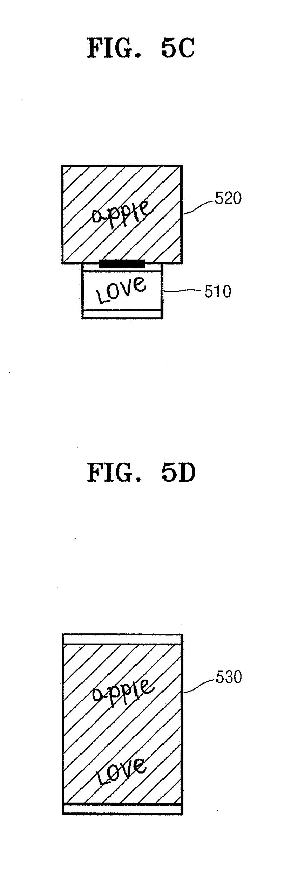

Referring to FIG. 5B, if a first data object 510 is selected, dragged, and moved to a second data object 520 that is the target of the merging operation, as illustrated in FIG. 5B, and entered into a merging range as illustrated in FIG. 5C, then, the second data object 530 becomes part of a merged object having additional data that belonged to the first data object in addition to the data originally belonging to the second data object 530, as illustrated in FIG. 5D. FIGS. 5B through 5D show an example in which the present exemplary embodiment is applied to memo data. Referring to FIG. 5D, the second data object, which is the target memo, keeps the characteristic that the second data object had before the merging (the color of the memo paper in this example), even after the merging.

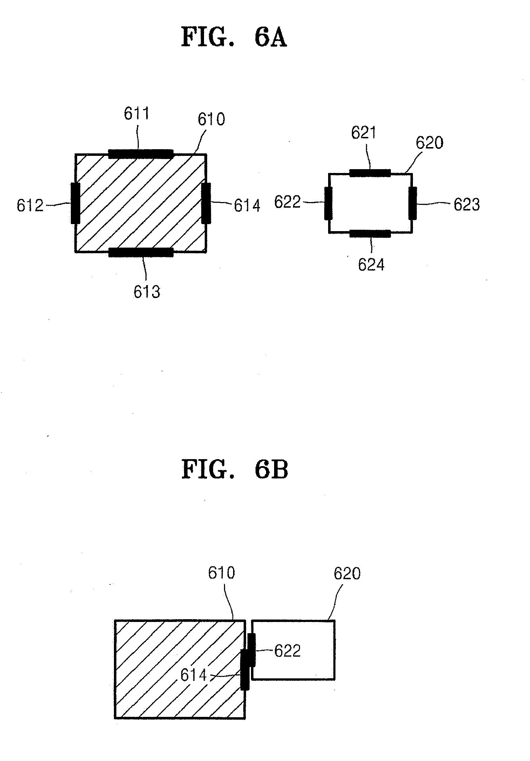

FIG. 6A illustrates an example of a screen in which two data objects including opened information items are moved close to each other, according to an exemplary embodiment of the present invention.

Referring to FIG. 6A, if a first data object 620 is moved toward a second data object 610 and the two objects come within a predetermined distance of each other, marks 611 through 614 and 621 through 624 indicating mergeable regions of the two data objects are expressed, indicated or displayed. In FIG. 6A, it can be seen that a mark indicating a mergeable region in the form of a guideline is expressed, indicated or displayed on every edge of the two data objects.

FIG. 6B illustrates an example of a screen in which two data objects including opened information items are moved so that mergeable regions of the two data objects come into contact with each other, according to an exemplary embodiment of the present invention.

Referring to FIG. 6B, the user moves a first data object 620 so that desired mergeable regions 614 and 622 among all the other mergeable regions of the two data objects come into contact. While the two data objects are in contact, if the user drops the first data object by releasing a mouse or the like, the control unit 240 merges the two data objects so that the mergeable regions 614 and 622 that are in contact are connected.

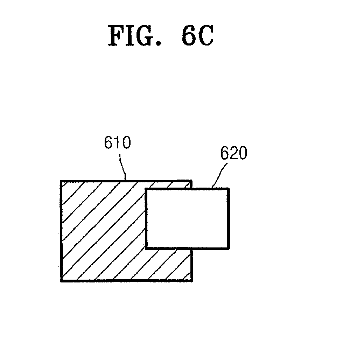

FIG. 6C illustrates an example of a screen in which two data objects including opened information items are moved beyond the respective mergeable regions according to an exemplary embodiment of the present invention.

Referring to FIG. 6C, if the user moves further the first data object 620 beyond the position where the two data objects come into contact, the two data objects are not merged and only the first data object is moved.

The present invention can also be embodied as computer readable codes on a computer readable recording medium. The computer readable recording medium is any data storage device that can store data which can be thereafter read by a computer system.

While the present invention has been particularly shown and described with reference to exemplary embodiments thereof, it will be understood by those of ordinary skill in the art that various changes in form and details may be made therein without departing from the scope of the present invention as defined by the following claims.

According to the structure of the present invention as described above, folders can be merged at the same level, and after inputting image data or text data as individual objects, when necessary later, the information items can be easily merged such that file management can be performed conveniently. Also, by providing the user interface by which the user can watch data on the screen and at the same time perform merging, the user can manage files more conveniently.

## Claims

1. A method of merging a first data object and a second data object displayed on a screen, the method comprising:
receiving a user command to merge the first and the second data objects; and
merging contents of the first and the second data objects according to the input user command.

2. The method of claim 1 wherein the step of receiving a user command comprises, if a user drags the first data object, moves the first data object close to an edge of the second data object in a direction in which the first data object is desired to be merged into the second data object, and then drops the first data object, recognizing the dropping as a command to merge the first data object into the edge of the second data object.

3. The method of claim 2, wherein the step of merging contents of the first and the second data objects comprises, if the first and the second data objects include opened information items, adding the contents of the first data object to the second data object at an edge of the second data object toward which the first data object is moved.

4. The method of any one of the preceding claims, wherein the step of receiving a user command comprises:
dragging the first data object and moving the first data object toward the second data object;
if the first data object is moved to within a predetermined distance from the second data object, displaying marks indicating mergeable regions on the first data object and the second data object; and
if the user moves the first data object so that mergeable regions displayed by at least two of the marks come into contact with each other, and drops the first data object, recognizing the dropping as a command to merge the first and the second data objects.

5. The method of claim 4, wherein the step of displaying marks comprises displaying at least one of the marks in a form of a guideline on at least a part of each edge of the first and the second data objects; and / or
wherein the step of recognizing the command to merge the first and the second data objects further comprises, when the mergeable regions are in contact with each other, displaying different marks on the mergeable regions in contact,
wherein the different marks can distinguish the mergeable regions in contact with each other from other regions of the first and the second data objects; and / or
wherein the step of merging the contents of the first and the second data objects comprises, if the first and the second data objects include opened information items, adding the contents of the first data object to the second data object so that the mergeable regions in contact with each other are connected.

6. The method of any one of the preceding claims, wherein the step of receiving a user command comprises:
dragging the first data object and moving the first data object toward the second data object;
if the first data object is moved into a merging range of the second data object, displaying on a screen an indication that the first and the second data objects can be merged; and
while the indication is displayed on the screen that the first and the second data objects can be merged, if a user drops the first data object, recognizing the dropping as a command to merge the first and the second data objects;
wherein the step of displaying on the screen the indication that the first and the second data objects can be merged comprises, if the first and the second data objects include opened information items, displaying a first mark indicating that the second data object can be merged on an edge of the second data object that faces the approaching first data object.

7. The method of claim 6, wherein the step of merging the contents of the first and the second data objects comprises adding the contents of the first data object to the second data object at the edge of the second data object on which the first mark is displayed; and / or
wherein the step of displaying on the screen the indication that the first and the second data objects can be merged further comprises displaying a second mark indicating that the first data object can be merged on an edge of the approaching first data object that faces the second data object.

8. The method of claim 7, wherein the step of merging the contents of the first and the second data objects comprises adding the contents of the first data object to the second data object so that the edge of the second data object on which the first mark is displayed is connected to the edge of the first data object on which the second mark is displayed.

9. A data object merging apparatus for merging a first data object and a second data object displayed on a screen, the apparatus comprising:
a user interface unit for receiving a user command to merge the first and the second data objects; and
a control unit for merging contents of the first and the second data objects according to the user command received from the user interface unit and for displaying the merged contents on the screen.

10. The apparatus of claim 9 wherein if, by using an input apparatus, a user drags the first data object, moves the first data object close to an edge of the second data object in a direction in which the first data object is desired to be merged into the second data object, and then drops the first data object, the user interface unit recognizes the dropping as a command to merge the first and the second data objects.

11. The apparatus of claim 10, wherein if the first and the second data objects include opened information items, the control unit merges the first data object into the second data object at the edge of the second data object toward which the first data object is moved.

12. The apparatus of any one of claims 9 to 11, wherein if, by using an input apparatus, a user drags the first data object and moves the first data object into a merging range of the second data object, the user interface unit displays marks indicating mergeable regions on the first and the second data objects, and if the user moves the first data object so that at least two of the mergeable regions indicated by the marks come into contact with each other, and drops the first data object, the user interface unit recognizes the dropping as a command to merge the first and the second data objects.

13. The apparatus of claim 12, wherein if the first and the second data objects include opened information items, the control unit merges the first data object to the second data object so that the mergeable regions in contact with each other are connected.

14. The apparatus of any one of claims 9 to 13, wherein if the user drags the first data object and moves the first data object into a merging range of the second data object, the user interface unit displays an indication on a screen that the first and the second data objects can be merged, and while the indication is displayed on the screen that the first and the second data objects can be merged, if the user drops the first data object, the user interface unit recognizes the dropping as a command to merge the first and the second data objects;
wherein if the first and the second data objects include opened information items, the user interface unit displays a mark indicating that the first and the second data objects can be merged, on an edge of the approaching first data object and/or the second data object.

15. The apparatus of claim 24, wherein the control unit merges the first data object into the second data object so that the edges of the first and the second data objects on which marks are displayed are connected to each other.
